# EUROPÄISCHE PATENTSCHRIFT

(11) **EP 1 712 686 B1**
(45) Veröffentlichungstag und Bekanntmachung des Hinweises auf die Patenterteilung: **21.09.2011**
(21) Anmeldenummer: 06007242.8
(22) Anmeldetag: 06.04.2006
(51) Int. Cl.: E02D 29/02

(54) **Verbindungselement, vorzugsweise für Drahtgitter**
Connecting device, in particular for reinforcement mat
Elément de connection, en particulier pour treillis d'armature

(30) Priorität: 14.04.2005 DE 202005005959 U
(43) Veröffentlichungstag der Anmeldung: 18.10.2006
(73) Patentinhaber: Rothfuss, Thomas, Dipl. Ing., 71735 Eberdingen (DE)
(72) Erfinder: Rothfuss, Thomas, Dipl. Ing., 71735 Eberdingen (DE)
(74) Vertreter: Jackisch-Kohl, Anna-Katharina

(56) Entgegenhaltungen:
- WO-A-90/13718
- DE-U1- 20 308 938
- US-A- 3 331 179
- US-A- 3 840 947
- US-B1- 6 305 432

## Beschreibung

Die Erfindung betrifft ein Verbindungselement, vorzugsweise für Drahtgitter, nach dem Oberbegriff des Anspruches 1.

Es ist bekannt, aus Drahtgittern Drahtkörbe zusammenzubauen. Die Drahtgitter werden mit Verbindungselementen in Form von Schließen, Haken, Ösen und dergleichen miteinander verbunden. Ösen als Verbindungselemente sind zunächst offen und werden nach dem Einhängen in die Drahtgitter mit Werkzeugen zusammengebogen und gegebenenfalls verschweißt. Ein Lösen der Drahtgitter ist nur unter Zerstörung der Ösen möglich.

Als Verbindungselemente sind auch Haken vorgesehen, die allerdings nicht verhindern können, dass sich die Drahtgitter unbeabsichtigt voneinander lösen können.

Es ist auch ein Verbindungselement bekannt (DE 203 08 938 U1), das als Sicherheitsanker ausgebildet ist und zur Befestigung von Bewehrungen von Bodenkörpern mit Boden-Stützkonstruktionen oder mit gitterartigen Stützkörpern im Landschaftsbau dient. Dieses Verbindungselement hat zwei gerade, spitzwinklig zueinander verlaufende Grundkörperabschnitte, die an einem Ende bogenförmig ineinander übergehen und deren andere Enden etwa halbkreisförmig gebogen sind. Diese freien Enden sind so angeordnet, dass sie in Seitenansicht in Verlängerung der geraden Grundkörperabschnitte liegen. Die abgebogenen freien Enden begrenzen eine Einführöffnung, die in die Einhängeöffnung des Verbindungselementes mündet. Die abgebogenen freien Enden des Grundkörpers begrenzen auch die Einhängeöffnung. Dieses Verbindungselement ist daher als nächstliegenden Stand der Technik angesehen.

Der Erfindung liegt die Aufgabe zugrunde, das gattungsgemäße Verbindungselement so auszubilden, dass es einfach zu montieren ist und die miteinander verbundenen Teile sicher zusammenhält.

Diese Aufgabe wird beim gattungsgemäßen Verbindungselement erfindungsgemäß mit den kennzeichnenden Merkmalen des Anspruches 1 gelöst.

Das erfindungsgemäße Verbindungselement lässt sich einfach montieren, da es offen ist. Das Verbindungselement wird so auf die zu verbindenden Teile aufgesetzt, dass sie in die Einführöffnung zwischen den Schenkelabschnitten des Grundkörpers gelangen können. Sie liegen versetzt zueinander und haben einen Abstand voneinander, der etwa der Dicke des einzuhängenden Teiles entspricht. Die entgegengesetzt schräg zueinander in Richtung auf den Grundkörperabschnitt verlaufenden Sperrteile ragen in die Einhängeöffnung, senkrecht zur Mittelebene des Verbindungselementes gesehen, und verhindern, dass das Verbindungselement unbeabsichtigt ausgehängt werden kann. Die durch die Einhängeöffnung verlaufenden Gitterdrähte können nur so weit in Richtung zueinander in der Einhängeöffnung bewegt werden, bis sie an den Sperrteilen zur Anlage kommen. Sie verhindern, dass die Gitterdrähte in den Bereich der Einführöffnung gelangen und verhindern dadurch zuverlässig, dass das Verbindungselement unbeabsichtigt ausgehängt wird. Die Schenkelabschnitte schließen an die Bogenabschnitte an. Dadurch können die in das Verbindungselement eingehängten Teile mühelos eventuell erforderliche Relativbewegungen zum Verbindungselement ausführen. Die Bogenabschnitte verbinden die Schenkelabschnitte mit dem gegenüberliegenden Grundkörperabschnitt.

Die Bogenabschnitte, die zugehörigen Schenkelabschnitte und die Sperrteile liegen jeweils in einer Ebene. Diese Ebenen liegen spitzwinklig zueinander. Das Verbindungselement hat darum in Stirnansicht V-Form. Aufgrund dieser geschränkten Form lassen sich die überlappenden Schenkelabschnitte einfach herstellen.

Da die Einführöffnung in die Einhängeöffnung mündet, wird das Verbindungselement so bewegt, dass das einzuhängende Teil von der Einführ- in die Einhängeöffnung gelangt. Dann kann das erfindungsgemäße Verbindungselement verdreht werden, so dass die einzuhängenden Teile in die Einhängeöffnung gelangen. Da die Schenkelabschnitte versetzt zueinander angeordnet sind, muss das Verbindungsglied nach dem Aufsetzen auf die einzuhängenden Teile gedreht werden, damit diese aus der Einführöffnung in die Einhängeöffnung gelangen. Somit kann das Verbindungselement einfach aufgesetzt werden. In montierter Lage sitzt es sicher auf den miteinander verbundenen Teilen. Im normalen Einsatz kommt das Verbindungselement nicht mehr in diejenige Lage, die es zum Einhängen benötigt. Da das Verbindungselement auch in montierter Lage offen ist, kann es bei Bedarf jederzeit ohne besondere Werkzeuge abgenommen werden.

Zur Erhöhung der Sicherheit des Verbindungselementes gegen unbeabsichtigtes Aushängen ist es vorteilhaft, wenn die Schenkelabschnitte des Grundkörpers gleich lang sind.

Bei einer besonders einfachen Ausführungsform begrenzen die Schenkelabschnitte die Einhängeöffnung.

Das Sperrteil liegt vorteilhaft unter einem stumpfen Winkel zum Grundkörperabschnitt, wodurch eine zusätzliche Sicherheit gegen unbeabsichtigtes Aushängen erreicht wird.

Bei einer besonders einfachen Ausführungsform ist der Sperrteil einstückig mit dem Grundkörperabschnitt ausgebildet. So kann der Sperrteil beispielsweise durch eine Abbiegung des Grundkörperabschnittes hergestellt werden.

Besonders vorteilhaft ist es, das Verbindungselement insgesamt einstückig auszubilden. Es kann dann beispielsweise durch einen Drahtabschnitt sehr einfach und kostengünstig gefertigt werden.

Eine optimale Sicherung gegen unbeabsichtigtes Aushängen des Verbindungselementes ergibt sich, wenn die Sperrteile der beiden Grundkörperabschnitte entgegengesetzt schräg zueinander liegen. Sollten die eingehängten Teile in der Einhängeöffnung in Richtung auf die Einführöffnung sich bewegen, wird durch die entgegengesetzt schräg zueinander liegenden Sperrteile sichergestellt, dass diese einzuhängenden Teile nicht in den Bereich der Einführöffnung gelangen.

Damit die eingehängten Teile im Verbindungselement trotz der Sperrteile noch ausreichend Bewegungsmöglichkeiten haben, enden die Sperrteile mit Abstand von den Bogenabschnitten.

Vorteilhaft liegen die Grundkörperabschnitte auf gleicher Höhe.

Weitere Merkmale der Erfindung ergeben sich aus den weiteren Ansprüchen, der Beschreibung und der Zeichnung.

Die Erfindung wird anhand eines in der Zeichnung dargestellten Ausführungsbeispieles näher erläutert. Es zeigen
- Fig. 1: in Seitenansicht ein erfindungsgemäßes Verbindungselement,
- Fig. 2: eine Ansicht in Richtung des Pfeiles II in Fig. 1,
- Fig. 3: das Verbindungselement gemäß Fig. 1 vor dem Aufsetzen auf zwei miteinander zu verbindende Drahtgitter,
- Fig. 4: eine Ansicht in Richtung des Pfeiles IV in Fig. 3,
- Fig. 5: zwei durch ein erfindungsgemäßes Verbindungselement miteinander verbundene Drahtgitter.

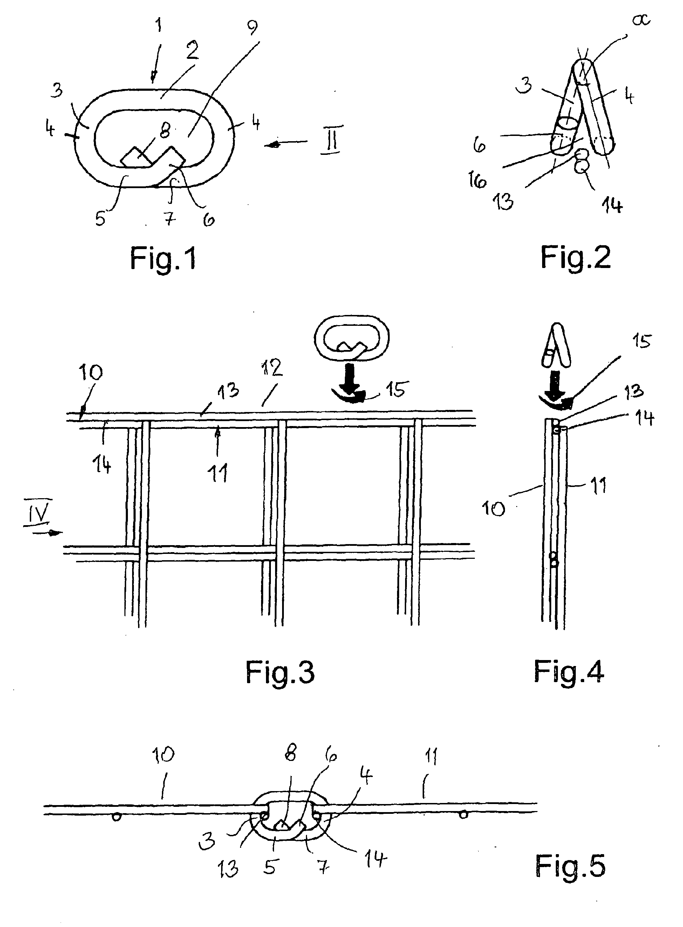

Mit dem ringförmigen Verbindungselement ist es möglich, zwei oder mehr Drahtgitter lösbar und dennoch sicher miteinander zu verbinden. Das Verbindungselement hat einen Grundkörper 1, der als offener Ring ausgebildet ist. Der Grundkörper hat einen geraden Abschnitt 2, der an beiden Enden in halbkreisförmige Bogenabschnitte 3, 4 übergeht. Der Bogenabschnitt 3 geht in einen parallel zum Abschnitt 2 liegenden geraden Schenkelabschnitt 5 über, dessen freies Ende 6 stumpfwinklig in Richtung auf den Grundkörperabschnitt 2 abgewinkelt verläuft. Der Bogenabschnitt 4 geht ebenfalls in einen parallel zum Abschnitt 2 liegenden geraden Schenkelabschnitt 7 über, dessen freies Ende 8 stumpfwinklig in Richtung auf den gegenüberliegenden Grundkörperabschnitt 2 verläuft. Die geraden, gleich langen und auf gleicher Höhe nebeneinander liegenden Schenkelabschnitte 5 und 7 erstrecken sich bis etwa in halbe Länge des Verbindungselementes, in Seitenansicht gemäß Fig. 1 gesehen. Die abgewinkelten Enden 6, 8 liegen etwa rechtwinklig zueinander und ragen, in Seitenansicht gesehen, in die Einhängeöffnung 9 des Verbindungselementes. Der Abstand zwischen den freien Enden 6, 8 und dem gegenüberliegenden Grundkörperabschnitt 2 ist größer als der Überstand der freien Enden 6, 8 über ihre Schenkelabschnitte 5, 7, die eine Einführöffnung 16 begrenzen. Sie mündet in die Einhängeöffnung 9.

Das Verbindungselement ist geschränkt ausgebildet (Fig. 2). Die Bogenabschnitte 3, 4 liegen entsprechend der Schränkung unter einem spitzen Schränkungswinkel α zueinander. Der Bogenabschnitt 3, der Schenkelabschnitt 5 und das freie Ende 6 liegen hierbei mit ihren Längsachsen in einer gemeinsamen Ebene. Auch der Bogenabschnitt 4, der Schenkelabschnitt 7 und das freie Ende 8 liegen mit ihren Längsachsen in einer gemeinsamen Ebene. Der Bogenabschnitt 3 und der Bogenabschnitt 4 liegen in bezug auf den Grundkörperabschnitt 2 entgegengesetzt schräg zueinander. Die Bogenabschnitte 3, 4 haben einen Abstand voneinander, der vorteilhaft geringfügig größer ist als die Dicke der Drahtstäbe der miteinander zu verbindenden Drahtgitter.

Im dargestellten Ausführungsbeispiel werden mit dem Verbindungselement zwei Drahtgitter 10 und 11 lösbar miteinander verbunden. Sie bestehen jeweils aus senkrecht einander kreuzenden Drahtgitterstäben. Die Drahtgitter 10, 11 können selbstverständlich auch eine andere Ausbildung haben. Sie werden beispielsweise zunächst um 180° verdreht zueinander aufeinander gelegt (Fig. 3 und 4). Anschließend wird das Verbindungselement mit seiner offenen Seite auf den Rand 12 der beiden aneinanderliegenden Drahtgitter aufgesetzt. Der Abschnitt zwischen den beiden Schenkelabschnitten 5,7 ist so groß, daß die beiden Drahtgitter 10, 12 mit ihren den oberen Rand 12 bildenden Drähten 13, 14 zwischen die beiden Schenkelabschnitte 5, 7 gelangen können (Fig. 2). Damit diese Drähte 13, 14 übereinander liegen, sind die beiden Drahtgitter 10, 11, wie sich aus den Fig. 3 und 4 ergibt, so gegeneinander versetzt, daß die Drähte 13, 14 im wesentlichen übereinander liegen. Auf diese Weise läßt sich das Verbindungselement mit seiner Einführöffnung 16 einfach auf die Drähte 13, 14 aufsetzen. Das Verbindungselement wird so weit verschoben, bis die Gitterdrähte 13, 14 im Bereich der Öffnung 9 oberhalb der abgewinkelten Enden 6, 8 des Verbindungselementes liegen. Es wird dann um seine vertikale Achse so weit gedreht (Pfeil 15 in den Fig. 3 und 4), daß die Gitterdrähte 13, 14 in der Einhängeöffnung 9 des Verbindungselementes liegen. Anschließend kann das gedrehte Verbindungselement wieder zurück in seine Ausgangslage geschwenkt werden, die es auch zum Aufsetzen auf die Gitterdrähte 13, 14 eingenommen hat. In dieser Lage liegt das Verbindungselement im wesentlichen parallel zur Längsrichtung der Gitterdrähte 13, 14. Die beiden Drahtgitter 10, 11 sind nunmehr miteinander verbunden und können auseinandergeschwenkt werden, beispielsweise in die in Fig. 5 dargestellte Lage, in der die beiden Drahtgitter 10, 11 fluchtend zueinander liegen und durch das Verbindungselement miteinander verbunden sind.

Da die Gitterdrähte 13, 14 nur in der verdrehten Lage des Verbindungselementes an den hochgestellten freien Enden 6, 8 der Schenkelabschnitte 5, 7 vorbei in das Verbindungselement eingehängt werden können, ist trotz der einfachen Verbindung der Drahtgitter 10, 11 mit dem Verbindungselement gewährleistet, daß sich die Drahtgitter nicht unbeabsichtigt vom Verbindungselement lösen können. Im normalen Einsatz der beiden Drahtgitter 10, 11 kommt das Verbindungselement nicht mehr in eine Lage, die es zum Ein- bzw. Aushängen benötigen würde. Zur hohen Verbindungssicherheit tragen die schräg verlaufenden Drahtenden 6, 8 bei. Sollten die Drahtgitter und/oder das Verbindungselement solche Relativbewegungen zueinander ausführen, daß die Gitterdrähte 13, 14 längs der Bogeabschnitte 3, 4 in Richtung auf die Schenkelabschnitte 5, 7 rutschen sollten, gelangen sie zur Anlage an den freien Enden 6, 8. Da sie schräg verlaufen und entgegen Verschieberichtung der Drahtstäbe 13, 14 gerichtet sind, verhindern sie zuverlässig, daß das Verbindungselement unbeabsichtigt aus den Drahtgittern 10, 11 ausgehängt wird. Die freien Enden 6, 8 sind einerseits so kurz, daß sie die Beweglichkeit des Verbindungselementes relativ zu den Drahtgittern 10, 11 nicht beeinträchtigen, daß sie andererseits jedoch sicherstellen, daß durch Relativbewegungen zwischen dem Verbindungselement und den Drahtgittern 10, 11 ein unbeabsichtigtes Aushängen zuverlässig vermieden wird.

Das Verbindungselement kann ohne Werkzeuge an Ort und Stelle durch einen einfachen Steckvorgang an den Drahtgittern 10, 11 angebracht und bei Bedarf auch wieder von ihnen gelöst werden. Das Verbindungselement läßt sich sehr einfach herstellen. Das Verbindungselement muß nicht, wie im Ausführungsbeispiel dargestellt, an einem randseitigen Gitterdraht 13, 14 befestigt werden. Das Verbindungselement kann auch einem in der Fläche des Drahtgitters 10, 11 liegenden Gitterdraht montiert werden.

Im Ausführungsbeispiel ist das Verbindungselement länglich ausgebildet. Es kann durchaus auch jede andere geeignete Umrißform haben. Wesentlich ist lediglich, daß dieses Verbindungselement geschränkt so ausgebildet ist, daß für die Montage dieses Verbindungselementes am Drahtgitter 10, 11 zwei Montagebewegungen notwendig sind, nämlich zunächst der Steckvorgang und daran anschließend der Drehvorgang. Durch diese beiden unterschiedlichen Bewegungen des Verbindungselementes wird die einfache und dennoch sichere Befestigung an den Drahtgittern erreicht. Das Verbindungselement wird vorteilhaft aus einem Draht gebogen, kann aber auch aus jedem anderen geeigneten Material hergestellt sein, beispielsweise aus einem Gußmaterial oder aus einem harten Kunststoff. Da das Verbindungselement vorteilhaft keine Biegeelastizität hat, besteht auch nicht die Gefahr, daß das Verbindungselement bei entsprechender Kraftbeaufschlagung aufgebogen wird und die eingehängten Drahtgitter freigibt.

## Patentansprüche

1. Verbindungselemente, vorzugsweise für Drahtgitter, mit einem Grundkörper (1), der eine Einhängeöffnung (9) wenigstens teilweise umschließt, in die eine Einführöffnung (16) mündet, die von zwei Schenkelabschnitten (5, 7) des Grundkörpers (1) begrenzt ist, die mit einem Abstand nebeneinander liegen, der etwa der Dicke des einzuhängenden Teiles (13, 14) entspricht,
**dadurch gekennzeichnet, dass** die beiden Schenkelabschnitte (5, 7) des Grundkörpers (1) jeweils an Bogenabschnitte (3, 4) anschließen, die die Schenkelabschnitte (5, 7) mit einem gegenüber liegenden Grundkörperabschnitt (2) verbinden, dass die beiden Schenkelabschnitte (5, 7) jeweils einen Sperrteil (6, 8) aufweisen, dass die Sperrteile (6, 8) entgegengesetzt schräg zueinander in Richtung auf den den Schenkelabschnitten (5, 7) des Grundkörpers (1) gegenüberliegenden Grundkörperabschnitt (2) verlaufen, dass die Sperrteile (6, 8) in die Einhängeöffnung (9) ragen, senkrecht zur Mittelebene des Verbindungselementes gesehen, dass die Sperrteile (6, 8) mit den Schenkelabschnitten (5, 7) und den Bogenabschnitten (3, 4) des Grundkörpers (1) jeweils in einer gemeinsamen Ebene liegen, und dass diese Ebenen spitzwinklig zueinander liegen.

2. Verbindungselement nach Anspruch 1,
**dadurch gekennzeichnet, dass** die Schenkelabschnitte (5, 7) gleich lang sind.

3. Verbindungselement nach Anspruch 1 oder 2,
**dadurch gekennzeichnet, dass** die Schenkelabschnitte (5, 7) die Einhängeöffnung (9) begrenzen.

4. Verbindungselement nach einem der Ansprüche 1 bis 3,
**dadurch gekennzeichnet, dass** der Sperrteil (6, 8) unter einem stumpfen Winkel zum jeweiligen Schenkelabschnitt (5, 7) liegt.

5. Verbindungselement nach einem der Ansprüche 1 bis 4,
**dadurch gekennzeichnet, dass** der Sperrteil (6, 8) einstückig mit dem jeweiligen Schenkelabschnitt (5, 7) ausgebildet ist.

6. Verbindungselement nach einem der Ansprüche 1 bis 5,
**dadurch gekennzeichnet, dass** das Verbindungselement einstückig ausgebildet ist.

7. Verbindungselement nach einem der Ansprüche 1 bis 6,
**dadurch gekennzeichnet, dass** die Sperrteile (6, 8) mit Abstand von den Bogenabschnitten (3, 4) enden.

8. Verbindungselement nach einem der Ansprüche 1 bis 7,
**dadurch gekennzeichnet, dass** die Schenkelabschnitte (5, 7) auf gleicher Höhe liegen.

## Claims

1. Connecting device, in particular for reinforcement mat, with a base body (1), which at least partially encloses a suspension opening (9), into which an insertion opening leads (16), which is delimited by two leg sections (5, 7) of the base body (1), which are situated side by side with a distance, that corresponds approximately the thickness of the part to be suspended (13, 14),
**characterised in that** the two leg sections (5, 7) of the base body (1) respectively join with curved sections (3, 4), which connect the leg sections (5, 7) with an opposing base body section (2), that the two leg sections (5, 7) respectively comprise a closure element (6, 8), that the closure elements (6, 8) run conversely to one another at an angle in the direction toward the base body section (2), opposing the leg sections (5, 7) of the base body (1), that the closure elements (6, 8) project into the suspension opening (9), seen vertical to the centre plane of the connecting element, that the closure elements (6, 8) together with the leg sections (5, 7) and the curved sections (3, 4) of the base body (1) are situated in the same plane, respectively, and that these planes are situated at sharp angles to one another.

2. Connecting device according to claim 1,
**characterised in that** the leg sections (5, 7) are of equal length.

3. Connecting device according to claim 1 or 2,
**characterised in that** the leg sections (5, 7) delimit the suspension opening (9).

4. Connecting device according to one of the claims1 to 3,
**characterised in that** the closure element (6, 8) is situated at an obtuse angle to the respective leg section (5, 7).

5. Connecting device according to one of the claims 1 to 4,
**characterised in that** the closure element (6, 8) is constructed as one piece with the respective leg section (5, 7).

6. Connecting device according to one of the claims 1 to 5,
**characterised in that** the closure element is constructed as one piece.

7. Connecting device according to one of the claims 1 to 6,
**characterised in that** the closure elements (6, 8) terminate with distance from the curved sections (3, 4).

8. Connecting device according to one of the claims 1 to 7,
**characterised in that** the leg sections (5, 7) are situated at the same level.

## Revendications

1. Éléments de connexion, en particulier pour treillis d'armature, avec un corps de base (1), lequel entoure au moins partiellement une ouverture de d'accrochage (9), dans laquelle débouches une ouverture d'entrée (16), laquelle est limitée par deux sections des jambes (5, 7) du corps de base (1), qui se trouvent côte à côte à une distance, qui correspond environ à l'épaisseur de la pièce à être accrocher (13, 14),
**caractérisés en ce que** les deux sections des jambes (5, 7) du corps de base (1) se rattachent respectivement à des sections courbes (3, 4) lesquelles relient les sections de jambes (5, 7) avec une section de corps de base (2), située à l'opposé, **en ce que** les deux sections de jambes (5, 7) comprennent respectivement une pièce de verrouillage (6, 8), **en ce que** les pièces de verrouillage (6, 8) se passe obliquement à l'opposé l'une de l'autre en direction de la section du corps de base (2), qui est située à l'opposé des sections des jambes (5, 7) du corps de base (1), **en ce que** les pièces de verrouillage (6, 8), vues perpendiculairement au plan médian d'élément de connexion, font saillie dans l'ouverture de suspension (9), **en ce que** les pièces de verrouillage (6, 8) sont situées respectivement dans un plan commun avec les sections des jambes (5, 7) et les sections courbes (3, 4) du corps de base (1), et que ces plans sont situés l'un à l'autre à angle aigu.

2. Élément de connexion selon revendication 1,
**caractérisé en ce que** les sections de jambes (5, 7) sont d'égale longueur.

3. Élément de connexion selon revendication 1 ou 2,
**caractérisé en ce que** les sections de jambes (5, 7) limitent l'ouverture d'accrochage (9).

4. Élément de connexion selon une des revendications 1 à 3,
**caractérisé en ce que** la pièce de verrouillage (6, 8) est située à angle obtus par rapport à la section de jambe (5, 7) respective.

5. Élément de connexion selon une des revendications 1 à 4,
**caractérisé en ce que** la pièce de verrouillage (6, 8) est formée d'un seul tenant avec la section de jambe (5, 7) respective.

6. Élément de connexion selon une des revendications 1 à 5,
**caractérisé en ce que** l'élément de connexion est formé d'un seul tenant.

7. Élément de connexion selon une des revendications 1 à 6,
**caractérisé en ce que** les pièces de verrouillage (6, 8) se terminent à distance des sections courbes (3, 4).

8. Élément selon une des revendications 1 à 7,
**caractérisé en ce que** les sections de jambes (5, 7) sont situées à la même hauteur.
